# EUROPÄISCHE PATENTSCHRIFT

(11) **EP 1 094 298 B1**
(45) Veröffentlichungstag und Bekanntmachung des Hinweises auf die Patenterteilung: **25.10.2006**
(21) Anmeldenummer: 00121565.6
(22) Anmeldetag: 02.10.2000
(51) Int. Cl.: G01C 21/26, G05D 1/02

(54) **Verfahren und Einrichtung zum navigationsgestützten Befahren von Strassenstrecken**
Method and device for driving using navigation support
Méthode et dispositif pour conduire avec un support de navigation

(30) Priorität: 09.10.1999 DE 19948734
(43) Veröffentlichungstag der Anmeldung: 25.04.2001
(73) Patentinhaber: Volkswagen Aktiengesellschaft, 38436 Wolfsburg (DE)
(72) Erfinder: Mai, Rudolf, 38442 Wolfsburg (DE); Vukotich, Alejandro, 64293 Darmstadt (DE); Pfeffer, Frank, 85101 Lenting (DE); Hamberger, Werner, Dr., 85101 Lenting (DE)

(56) Entgegenhaltungen:
- EP-A- 0 738 946
- EP-A- 0 803 853
- EP-A- 0 913 751

## Beschreibung

Die Erfindung betrifft ein Verfahren sowie eine Einrichtung zum navigationsgestützten Befahren von Straßenstrecken mit Hilfe elektronisch kartographierter und/oder prädiktiv bekannter Streckendaten, gemäß Oberbegriff der Patentansprüche 1 und 6.

Verfahren und Einrichtungen zum navigationsgestützten Befahren von Straßenstrecken sind in vielfältiger Weise, auch in vielfältiger Funktionsweise bekannt. Dazu werden Navigationssysteme bekannter Art eingesetzt, mit denen im wesentlichen zwei Funktionen bewerkstelligt werden. Als erstes wird eine satellitengestützte Ortung des eigenen Fahrzeuges vorgenommen. Solche Systeme werden als GPS-Systeme (Global Positioning System) bereits vielfach eingesetzt. Mit Hilfe dieser Ortsbestimmung wird das eigene Fahrzeug in eine elektronisch gespeicherte Streckenkarte hineinprojiziert. Innerhalb einer elektronischen Einrichtung wird dann eine zuvor abgefragte oder eingegebene Fahrstrecke hinsichtlich günstigster Befahrbarkeit errechnet. Sodann wird auf einem Anzeigedisplay die Route aktuell bekanntgegeben. Durch die permanente oder zumindest zyklische Ortung des eigenen Fahrzeuges kann auf dem Anzeigedisplay dann aktuell auch angegeben werden, wann der Fahrer abbiegen muß, bzw. wann er welche Fahrstrecken beispielsweise Autobahnauffahrten oder -abfahrten nehmen muß. Mit einer solchen Verkehrsführung, die über ein Display und ggf. auch sprachunterstützt erfolgt, wird der Fahrer somit über die gesamte Fahrstrecke assistenzmäßig begleitet.

Überdies ist das Bestreben in der Zukunft zumindest in Ballungsgebieten oder an verkehrstechnisch schwierigen Stellen eine automatische Verkehrsführung zu realisieren. Bei einer automatischen Verkehrsführung bedarf es aber nicht nur der Bekanntheit der befahrenen Strecke im Sinne einer Straßenkarte, sondern auch der Bekanntheit örtlicher Gegebenheiten. So sind vielfach Verkehrszeichenerkennungen elektronischer Art bekannt, welche mit elektronischen Kameras von den optisch erfaßten Verkehrszeichen, mit Hilfe von Mustervergleichsverfahren ihre Bedeutung ermitteln.

Auch die Deutung und Umsetzung aktueller Staumeldungen oder Baustellenbetrieb oder dgl. mehr liegen bei der Realisierung eines solchen technischen Zieles mit auf dem Programm.

Weiterhin ist bekannt, daß die satellitengestützten Navigationssysteme nur unter erheblichem technischen Aufwand hohe Ortsauflösungen im Bereich eines Meters gewährleisten. Als weiteres Kriterium ist daher die Fahrbahnerkennung wichtig.

So ist beispielsweise aus der DE 195 07 957 C1 eine Spurabtastung mit einer entsprechenden Warneinrichtung bekannt. Hierbei wird vom Fahrzeug aus, mit einer seitlich angebrachten optischen Tasteinrichtung berührungslos der jeweils seitliche Fahrbahnbereich abgetastet und nachfolgend ausgewertet. Dabei werden optische Abtasteinrichtungen, bestehend aus mehreren angereihten Infrarotsendeelementen und einem entsprechenden CCD-Array benutzt, wobei die nachgeschaltete Auswerteeinheit zur Laufzeitmessung und zur Kontrastmessung sowie zur Konturenerkennung eingerichtet ist. Mit diesem optischen Abtastsystem können dann Einschlafwarnungen oder automatische Spurhaltungsfunktionen generiert werden.

Aus der DE 296 20 357 U1 ist eine Einrichtung bekannt, welche sich mit der "Tote-Winkel-Gefahr" befaßt. Hierzu sind Seitensensoren vorgesehen, die Gegenstände und Fahrzeuge erfassen, die sich seitlich in Höhe des Fahrzeuges bewegen können und ggf. im toten Winkel der Rückspiegel liegen. Hierbei werden nicht Fahrbahngegebenheiten, sondern verkehrstechnische Gegebenheiten wie nachfolgende oder begleitende Fahrzeuge berücksichtigt.

Aus der DE 198 18 259 A1 ist eine Spurwechselwarneinrichtung bekannt. Hierbei wird eine erste und zweite Überwachungseinrichtung vorgeschlagen zur Erfassung des Vor- und Rückraumes dort befindlicher Fahrzeuge, und daraus werden deren Sicherheitsabstände berechnet. Ein beginnender Spurwechsel wird dabei erfaßt und ein Aktivierungssignal erzeugt, welches den Fahrer warnt.

Weitere Systeme wie Radarsensoren sind aus der DE 40 03 057 C2 bekannt, welche den Raum um das Fahrzeug herum überwachen sollen.

Aus der DE 197 25 656 A1 ist ein Sicherheitsüberholsystem bekannt, hierbei wird ein Verfahren sowie eine Vorrichtung zur Unterstützung von Überholvorgängen im Straßenverkehr für den Einsatz in Kraftfahrzeugen vorgeschlagen. Dabei werden mittels Sensoren verschiedene Entfernungen und Relativgeschwindigkeiten von Objekten vor dem überholenden Fahrzeug, insbesondere vom Gegenverkehr, erfaßt und Überholdaten von einer Berechnungsvorrichtung berechnet, die einen Rückschluß darauf zulassen, ob ein Überholvorgang unter den gegenwärtigen Bedingungen, durch Leistungszuführung durch das Antriebsaggregat, oder überhaupt nicht möglich ist. Warnsignaleinrichtungen informieren dabei den Fahrer über die entsprechenden Bedingungen.

Des weiteren sind optische Aufzeichnungs- und Bildspeichereinrichtungen zur allgemeinen Verkehrsüberwachung bekannt. Hierbei erfolgt die Überwachung aber fahrzeugextern, d. h. sie dienen nicht der Fahrzeugsteuerung selbst, sondern der externen Verkehrsüberwachung zur Ermittlung entsprechender Informationen. Ein solches Verfahren ist aus der DE 43 23 984 bekannt.

Die genannten Verfahren und Einrichtungen sind jedoch insgesamt nicht in der Lage für sich einen automatischen Fahrzeugbetrieb oder zumindest eine erhöhte Fahrerassistenz im Sinne einer zumindest temporären automatischen Verkehrs- oder Betriebsführung des Kraftfahrzeuges zu gewährleisten.

Darüber hinaus genügt es nicht das Fahrzeug als solches zu orten. Die Strecken und Straßen, welche elektronisch kartographiert sind, können sich auch aktuell in relativ kurzen Zeitabständen ändern. So kann beispielsweise die Einbindung einer Baustelle in eine Strecke dem Navigationssystem noch weitgehend unbekannt sein. Durch die Tatsache, daß die Verkehrs- oder Straßenführung im Baustellenbereich oftmals erheblich verändert wird, beispielsweise in Richtung der Gegenrichtungsfahrbahnen, so können elektronisch kartographierte Daten dieser Art oftmals nicht schnell genug aktualisiert werden. Außerdem können aktuelle Ereignisse, wie Unfälle auch zu einer Umleitung oder einer besonderen Fahrbahnführung führen. Weitere denkbare, und durchaus realistische Ereignisse könnten Fahrbahnbeschädigungen oder Fahrbahnversetzungen durch Erdbewegungen sein.

Bei einem automatischen Fahrbetrieb muss das Fahrzeug jedoch insgesamt auf alle solche Gegebenheiten eingestellt und vorbereitet sein.

Aus der EP 0 803 853 A1 ist ein Verfahren zum navigationsgestützten Befahren von Straßenstrecken mit Hilfe elektronisch kartographierter und/oder prädiktiver Streckendaten bekannt, wobei die elektronisch kartographierten und/oder prädiktiven Streckendaten während des Fahrbetriebes durch permanente Spurprüfung verifiziert werden, wobei die optische Spurerkennung mit Hilfe einer Kamera erfolgt. Die Spurerkennung dient dazu festzustellen, in welcher von mehreren Fahrspuren sich das Kraftfahrzeug befindet. Um nun die Fahrtrichtungshinweise für den Fahrer möglichst komfortabel zu gestalten, erhält dieser frühzeitig bereits Anweisungen, in die geeignete Fahrspur für die nächste Fahrtrichtungsänderung zu wechseln.

Aus der EP 0 738 946 A1 ist eine automatischen Fahrleiteinrichtung für ein Kraftfahrzeug bekannt, umfassend einen automatischen Fahrabschnitt, der dafür.vorgesehen ist, eine Straße vor dem Fahrzeug basierend auf erfassten Straßendaten zu erkennen und das Fahrzeug so zu steuern, dass es auf einer erkannten Straße gemäß einem auf einer Straßenkarte voreingestellten Zielkurs fährt, und einen Navigationsabschnitt, der eine Straßenkarteninformationsspeichereinrichtung umfasst, die Straßendaten enthält und dafür vorgesehen ist, eine gegenwärtige Position des Fahrzeugs auf der Straßenkarte gemäß einer ersten Genauigkeit zu bestimmen und den automatischen Fahrabschnitt so anzuweisen, dass er das Fahrzeug derart leitet, damit es dem Zielkurs folgt. Dabei ist weiter vorgesehen, dass durch eine Kamera aufgenommene Verkehrsschilder berücksichtigt werden können, um beispielsweise den Straßentyp oder die erlaubte Höchstgeschwindigkeit zu bestimmen.

Der Erfindung liegt somit in verfahrensgemäßer wie auch in einrichtungsgemäßer Weise die Aufgabe zugrunde, ein Verfahren sowie eine Einrichtung der bekannten Art dahingehend zu verbessern, dass örtliche aktuelle Fahrbahngegebenheiten in den Fahrbetrieb mit einbeziehbar sind.

Die gestellte Aufgabe bei einem Verfahren der gattungsgemäßen Art erfindungsgemäß durch die kennzeichnenden Merkmale des Patentanspruches 1 gelöst. Weitere vorteilhafte Ausgestaltungen des erfindungsgemäßen Verfahrens sind in den abhängigen Ansprüchen 2 bis 5 angegeben.

Bei einer Einrichtung der gattungsgemäßen Art ist die gestellte Aufgabe durch die kennzeichnenden Merkmale des Patentanspruches 6 gelöst.

Weitere vorteilhafte Ausgestaltungen der erfindungsgemäßen Einrichtung sind in den übrigen abhängigen Ansprüchen 7 bis 11 angegeben.

Kern der Erfindung ist sowohl in verfahrensgemäßer, als auch in einrichtungsgemäßer Weise, dass die elektronisch kartographierten und/oder prädiktiven Streckendaten während des Fahrbetriebes durch eine permanente Spurprüfung verifiziert werden. Durch die permanente Spurprüfung und die entsprechende Verifizierung der kartographierten Streckendaten wird eine zweifache Wirkung erreicht. Die erste Wirkung besteht darin, dass das Fahrzeug auch Abweichungen von ihm bekannten prädiktiven Streckendaten oder elektronisch kartographierten Streckendaten erfassen und vor allem im automatischen Fahrbetrieb darauf reagieren kann. Die zweite Wirkung besteht darin, dass Abweichungen von kartographierten oder prädiktiven Streckendaten durch die permanente Spurverifizierung aktualisiert werden können. Das heißt, wenn ein Fahrzeug eine Strecke befährt und eine Abweichung von den bekannten Streckendaten erkennt, so können diese Abweichungen dann ortsbezogen und adaptiv korrigierend zu den Streckendaten hinzugefügt abgespeichert werden. Hierbei kann außerdem die adaptive, korrigierte Fahrbahnführung auch allgemein verfügbar, zu einer Zentrale gesendet werden. Auf diese Weise werden befahrene Stecken aktuell immer und grundsätzlich sofort erkannt und sind zum einen beim Wiederbefahren mit dem eigenen Fahrzeug bereits vorbekannt, und können überdies auch bei zentral angelegten kartographischen Datenbanken adaptiv hinterlegt werden und so einen extrem hohen Allgemeinnutz haben.

Die Spurverifizierung, insbesondere die Tatsache, dass diese permanent durchgeführt wird, führt zu einer deutlichen Steigerung der Sicherheit bei navigationsgeführtem Fahrbetrieb. Insbesondere wenn daran gedacht ist, zumindest temporär oder lokal auf entsprechenden Strecken die Fahrzeuge automatisch durch ein Autopilotsystem zu führen, ist diese permanente Spurverifizierung eine erhebliche Verbesserung für die Sicherheit im Gesamtbetriebsverfahren.

Dadurch, dass die aktuellen Ergebnisdaten der Spurprüfung den Streckendaten ortsbezogen zugeordnet und abgespeichert werden, gewinnen die aktuellen Spurprüfungs- oder Spurverifizierungsdaten nicht nur taktischen Charakter, also bewirken nicht nur eine augenblickliche Reaktion des Regelsystems im Kraftfahrzeug, sondern sie bewirken auch eine strategische Einflussnahme. Mit strategischer Einflussnahme ist die zukünftige Befahrung, beispielsweise die Wiederbefahrung der Strecke oder auch die Befahrung der Strecke durch nachfolgende Fahrzeuge, gemeint.

Weiterhin vorteilhaft ist, dass die aktuellen Ergebnisdaten sowie die Streckendaten mit den aktuellen Daten einer kameragestützten elektronischen Verkehrszeichenerkennung korreliert werden. Damit komplettiert sich das System bzw. das Verfahren nunmehr auf eine tatsächlich mögliche, vollständige autopilotgeführte Betriebsweise des Fahrzeuges.

So ist weiterhin vorteilhaft, dass die so insgesamt korrelierten Daten in Summe ortsbezogen zugeordnet und abgespeichert werden. Das heißt, Navigationsdaten, Spurprüfungsdaten sowie auch Verkehrszeichenerkennung werden insgesamt korrelierend erfaßt und daraus ggf. Situationsdaten bestimmt. Dabei können die so ermittelten aktuellen ortsbezogenen Summendaten adaptiv den externen elektronischen Streckendaten zur externen Verwertung über ein Mobilfunknetz (GSM) an eine Zentrale übermittelt werden.

Weiterhin vorteilhaft ist ausgestaltet, daß die Daten über ein kraftfahrzeuginternes Wechselspeichermedium aus dem Fahrzeug exportierbar bzw. in das Fahrzeug importierbar sind. Durch einen solchen Einsatz von Daten aus Wechselspeichermedien ist es möglich, individuelle Streckeninformationen von einem Fahrzeug zum anderen zu transportieren, falls die Übermittlung an eine Zentrale nicht gewünscht ist.

Gemäß der erfindungsgemäßen Einrichtung besteht nun in Realisierung des erfindungsgemäßen Verfahrens die Erfindung darin, daß mit Hilfe einer Kamera eine optische Spurerkennung durchführbar ist und daß diese Daten einem Auswerterechner zugeführt werden, mit welchem Navigationsdaten und aktuelle Spurerkennungsdaten ortsbezogen korrelierbar sind, und der darauf abgespeicherte automatische Eingriff auf das elektrische Gaspedal und/oder das elektrische Bremspedal erfolgt. Hierdurch wird auf den Fahrbetrieb Einfluß genommen, der dann abhängig ist, von den erkannten Spurdaten, also ob die aktuellen optisch erfaßten Spurdaten mit den kartographierten Daten übereinstimmen.

Hierbei ist zu berücksichtigen, daß kartographierte Daten, wie sie in GPS-Systemen verwendet werden, ohnehin in den meisten Fällen keine hohe ortsaufgelöste Streckenführung abgespeichert haben. Das heißt, es wird mitunter eine individuelle Fahrbahnführung beispielsweise eine kurze Biegung oder eine kleinere Kurve, deren Richtungswechsel nicht bedeutsam ist, in der elektronischen Straßenkarte nicht dargestellt. An dieser Stelle führt die optische Erkennung und die Verifizierung der Fahrbahn als solches durch die Spurüberwachung zu einem Schließen genau dieser Erkenntnislücke bei den besagten elektronischen Straßenkarten.

In vorteilhafter Ausgestaltung ist eine elektronische Verkehrszeichenerkennung dem System ergänzend beigefügt, dessen Daten dem Auswerterechner zugeführt werden. Durch die Einbeziehung von Verkehrszeichen wird die örtliche verkehrstechnische Situation um ein weiteres wesentliches Merkmal komplettiert.

In weiterer vorteilhafter Ausgestaltung ist vorgesehen, daß der Navigationsrechner informationstechnisch bi-direktional mit dem Auswerterechner verschaltet ist. Dabei werden sowohl Navigationsdaten dem Auswerterechner zugeführt, als auch korrelierte Daten vom Auswerterechner dem Navigationssystem zurückgeführt, um beispielsweise strategisch adaptive Abspeicherung von erkannten Situationen oder Fahrbahnführungen abspeichern zu können.

In weiterer vorteilhafter Ausgestaltung der erfindungsgemäßen Einrichtung ist vorgesehen, daß ein Navigationsrechner mit einer Wechselspeichereinheit versehen ist. Da der Navigationsrechner für sich dem Navigationssystem zugeführt wird und der Auswerterechner von demselben autark sein kann, hat dabei den Vorteil, daß das System baukastenmäßig aufgebaut sein kann. Um den nur begrenzt zur Verfügung stehenden Einbauraum im Kraftfahrzeug optimal zu nutzen, kann es dabei auch von Vorteil sein, gewisse Module der Einheit im Kraftfahrzeug zu verteilen und über Informationsleitungen oder Busleitungen miteinander zu verschalten.

In weiterer vorteilhafter Ausgestaltung ist vorgesehen, daß der Auswerterechner mit der Tempomat- und ADR-Einheit zur komplettierten automatischen Steuerung des Kraftfahrzeuges logisch verschaltet ist. Insbesondere bei Automatikgetriebefahrzeugen sind Tempomatfunktionen von erheblichem Vorteil, wobei die gewünschte Geschwindigkeit eingestellt und sodann auch konstant beibehalten wird. Um gewisse gefährliche Situationen automatisch auszuregeln, ist der Tempomateinheit hier auch ein ADR-System zugeordnet. Mit ADR-System ist die automatische Distanzregelung gemeint, d. h. Abstandssensoren erkennen den Abstand zum vorausfahrenden Fahrzeug oder gar zu Hindernissen. Durch eine Einbindung einer solchen ADR-Funktion in ein Tempomatsystem wird immer wieder verifiziert, ob die angestrebte Geschwindigkeit auch situationsangepaßt gehalten werden kann, oder gar eine Bremsung eingeleitet werden muß.

In weiterer vorteilhafter Ausgestaltung ist auch ein automatischer Lenkeingriff vorgesehen, der durch die permanente Spurverifizierung oder auch Spurerkennung angesteuert werden kann. Hierdurch ist es möglich, eine automatische Verkehrsführung dergestalt durchzuführen, daß der Fahrer zumindest über bestimmte Streckenabschnitte hoher Verkehrsdichte, wie oben beschrieben, auch keinen Lenkeingriff mehr vornehmen muß.

Insgesamt stellt die Erfindung nunmehr eine weitere Komplettierung auf dem Weg zu einem praxistauglichen Autopilotsystem dar. Da das Autopilotsystem als solches nicht immer grundsätzlich das angestrebte Ziel ist, wird aber zumindest im vorliegenden Fall, eine solch hohe und komfortable Fahrerassistenz erreicht, die zum einen einen hohen Sicherheitsstandard erfüllt und zum anderen den Fahrer in kritischen Verkehrssituationen erheblich unterstützt.

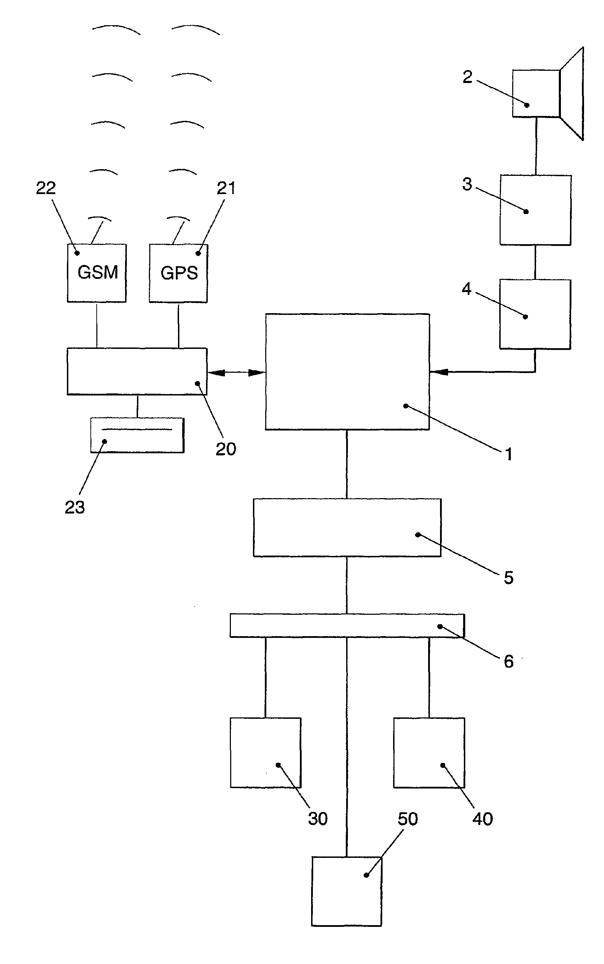

Die Erfindung ist in der Zeichnung dargestellt und nachfolgend näher beschrieben.

Die Abbildung zeigt in schematischer Darstellung die Verschaltung der einzelnen Elemente, wodurch auch die Funktionsweise des erfindungsgemäßen Verfahrens erkennbar ist.

Zentrale Einheit ist ein Auswerterechner 1, der in diesem Ausführungsbeispiel eine separate, für sich gesehene Baueinheit darstellt. Dieser ist logisch verbunden mit einer elektronischen Kamera 2. Die elektronische Kamera 2 erfaßt Bilddaten insbesondere vor dem Fahrzeug, um zum einen eine Spurerkennung durchführen zu können, beispielsweise anhand von Spurmarkierungen oder der Erkennung fahrbahnrandtypischer Merkmale. Diese können als Muster abgelegt sein, so daß über die kameragestützte Spurerkennung eine Vielzahl von möglichen Fahrbahnmarkierungen oder Fahrbahnrändern erkennbar ist.
Die Spurerkennungseinheit 3 ist somit logisch der Kamera 2 direkt nachgeschaltet. In den Informationsweg ist eine Verkehrszeichenerkennung oder Verkehrszeichendeutung 4 mitaufgeschaltet. Dieser werden wieder alle Bilddaten zugeleitet.

Zur Komplettierung eines komfortablen, automatischen Systemes ist jedoch die Verkehrszeichenerkennung als Hinzufügung von großem Vorteil. Die Summe der so erkannten und durch Mustervergleich elektronisch deutbaren Umgebungsdaten werden dem Auswerterechner 1 insgesamt zugeführt. Ebenfalls werden dem Auswerterechner 1 die Daten des Navigationsrechners 20 zugeführt. Der Navigationsrechner 20 ist wiederum mit einer GPS-Einheit 21 zur satellitengestützten Ortung des eigenen Fahrzeuges versehen. Des weiteren kann der Navigationsrechner 20 eine GSM-Schnittstelle enthalten, über welche Navigationsdaten sowohl von extern empfangen, als auch gesendet werden können.

Dieser Sendeempfangsbetrieb wird über ein öffentliches Mobilfunknetz aufrecht erhalten.

Weiterhin enthält der Navigationsrechner 20 eine Wechselspeichereinheit 23, für beispielsweise Disketten oder CD-ROMs oder andere Datenträger, über welche Navigationsdaten exportierbar bzw. importierbar sind.

Der regelungstechnische Ausgang des Auswerterechners 1 ist mit einer Tempomat- und ADR-Einheit 5 verschaltet. Hierüber wird ein geschwindigkeitsgeregelter Betrieb des Fahrzeuges ermöglicht, wobei demselben jedoch die erkannten Umgebungsdaten sowie die Orts- und Navigationsdaten hinzugefügt werden. Am Ausgang der Tempomat- und ADR-Einheit 5 ist ein Stellsignalgenerator 6, der letztendlich in Summe aller verfügbaren und erhaltenen Daten die Stellsignale für das elektrische Gaspedal 30, das elektrische Bremspedal 40 und den elektrischen Lenkeingriff 50 generiert. Hierdurch können also in Summe alle Stelleingriffe, das Beschleunigen, Bremsen und Lenken vom System in völliger Autopilotmanier gesteuert werden.

## Patentansprüche

1. Verfahren zum navigationsgestützten Befahren von Straßenstrecken mit Hilfe elektronisch kartographierter und/oder prädiktiver Streckendaten, wobei die elektronisch kartographierten und/oder prädiktiven Streckendaten während des Fahrbetriebes durch permanente Spurprüfung verifiziert werden, wobei optische Spurerkennung mit Hilfe einer Kamera erfolgt,
**dadurch gekennzeichnet,**
**dass** Abweichungen von den bekannten Streckendaten erkannt werden, wobei diese Abweichungen dann ortsbezogen und adaptiv korrigierend zu den Streckendaten hinzugefügt abgespeichert werden oder an eine Zentrale gesendet werden.

2. Verfahren nach Anspruch 1,
**dadurch gekennzeichnet,**
**dass** sowie aktuelle Ergebnisdaten der Spurprüfung sowie die Streckendaten mit den aktuellen Daten einer kameragestützten elektronischen Verkehrszeichenerkennung korreliert werden.

3. Verfahren nach Anspruch 2,
**dadurch gekennzeichnet,**
**dass** die so insgesamt korrelierten Daten ortsbezogen zugeordnet und abgespeichert werden.

4. Verfahren nach einem der vorhergehenden Ansprüche,
**dadurch gekennzeichnet,**
**dass** die ermittelten, aktuellen ortsbezogenen Daten zur Adaption den externen elektronischen Streckendaten zur externen Verwertung über ein Mobilfunknetz (GSM) an eine Zentrale übermittelt werden.

5. Verfahren nach einem der vorhergehenden Ansprüche,
**dadurch gekennzeichnet,**
**dass** die Daten über ein Kfz-internes Wechselspeichermedium exportierbar- bzw. importierbar sind.

6. Einrichtung zum navigationsgestützten Befahren von Straßenstrecken mit Hilfe elektronisch kartographierter und/oder prädiktiver Streckendaten, mit Hilfe von Navigationsmitteln, wobei mit Hilfe einer Kamera (2) eine optische Spurerkennung durchführbar ist, und dass diese Daten einem Auswerterechner (1) zuführbar sind, mit welchem Navigationsdaten und aktuelle Spurerkennungsdaten ortsbezogen korrelierbar sind,
**dadurch gekennzeichnet,**
**dass** die Einrichtung so angepasst ist, dass Abweichungen von den bekannten Streckendaten erkannt werden, wobei diese Abweichungen dann ortsbezogen und adaptiv korrigierend zu den Streckenddaten hinzugefügt abgespeichert oder an eine Zentrale gesendet werden.

7. Einrichtung nach Anspruch 6,
**dadurch gekennzeichnet,**
**dass** der Kamera (2) eine elektronische Verkehrszeichenerkennungs- oder Verkehrszeichendeutungseinheit (4) zugeordnet bzw. nachgeschaltet ist.

8. Einrichtung nach einem der Ansprüche 6 oder 7,
**dadurch gekennzeichnet,**
**dass** der Navigationsrechner (20) informationstechnisch bi-direktional mit dem Auswerterechner (1) verschaltet ist, um sowohl Navigationsdaten dem Auswerterechner zuzuführen, als auch korrelierte Daten vom Auswerterechner (1) dem Navigationssystem zur strategischen, adaptiven Abspeicherung zu übermitteln.

9. Einrichtung nach Anspruch 8,
**dadurch gekennzeichnet,**
**dass** der Navigationsrechner (20) mit einer Wechselspeichereinheit (23) versehen ist.

10. Einrichtung nach einem der Ansprüche 6 bis 9,
**dadurch gekennzeichnet,**
**dass** der Auswerterechner (1) mit der Tempomat- und ADR-Einheit (5) zur komplettierten, automatischen Steuerung des Kraftfahrzeuges logisch verschaltet ist.

11. Einrichtung nach einem der Ansprüche 6 bis 10,
**dadurch gekennzeichnet,**
**dass** Mittel (50) zum automatischen Lenkeingriff vorgesehen sind.

## Claims

1. Method for navigation-aided driving over roadways with the aid of electronically mapped and/or predictive route data, the electronically mapped and/or predictive route data being verified by permanent track checking during the driving operation, optical track recognition being effected with the aid of a camera, **characterized in that** deviations from the known route data are recognized, these deviations then being stored in a location-related and adaptively correcting manner added to the route data or being sent to a central station.

2. Method according to Claim 1, **characterized in that** current result data of the track checking and the route data are correlated with the current data of a camera-based electronic traffic sign recognition system.

3. Method according to Claim 2, **characterized in that** the data thus correlated overall are allocated in a location-related manner and are stored.

4. Method according to one of the preceding claims, **characterized in that** the current location-related data determined are transmitted to a central station via a mobile radio network (GSM) for external utilization for adaptation of the external electronic route data.

5. Method according to one of the preceding claims, **characterized in that** the data can be exported or imported via a removable storage medium internal to the motor vehicle.

6. Device for navigation-aided driving over roadways with the aid of electronically mapped and/or predictive route data, with the aid of navigation means, wherein an optical track recognition can be performed with the aid of a camera (2), and these data can be supplied to an evaluation computer (1) by means of which navigation data and current track recognition data can be correlated in a location-related manner, **characterized in that** the device is adapted in such a manner that deviations from the known route data are recognized, these deviations then being stored in a location-related and adaptively correcting manner added to the route data or being sent to a central station.

7. Device according to Claim 6, **characterized in that** an electronic traffic sign recognition or traffic sign interpretation unit (4) is allocated to or connected downstream of the camera (2).

8. Device according to one of Claims 6 or 7, **characterized in that** the navigation computer (20) is interconnected bidirectionally with the evaluation computer (1) with respect to information in order to both supply navigation data to the evaluation computer and transmit correlated data from the evaluation computer (1) to the navigation system for strategic adaptive storage.

9. Device according to Claim 8, **characterized in that** the navigation computer (20) is provided with a removable storage unit (23).

10. Device according to one of Claims 6 to 9, **characterized in that** the evaluation computer (1) is logically interconnected with the Tempomat and ADR unit (5) for complete automatic control of the motor vehicle.

11. Device according to one of Claims 6 to 10, **characterized in that** means (50) for automatic steering intervention are provided.

## Revendications

1. Procédé pour conduire sur des itinéraires routiers avec un support de navigation à l'aide de données d'itinéraire cartographiées et/ou prédites de manière électronique, les données d'itinéraire cartographiées et/ou prédites de manière électronique étant vérifiées au cours de la conduite par une vérification permanente du tracé, une reconnaissance optique du tracé étant effectuée à l'aide d'une caméra,
**caractérisé en ce que**
des écarts par rapport aux données d'itinéraire connues sont reconnus, ces écarts étant alors mémorisés en plus des données d'itinéraires avec correction adaptative et en fonction du lieu, ou bien étant envoyés à une centrale.

2. Procédé selon la revendication 1,
**caractérisé en ce que**
des données de résultat actuelles de la vérification du tracé ainsi que les données d'itinéraire sont corrélées avec les données actuelles d'une reconnaissance des panneaux routiers électronique supportée par caméra.

3. Procédé selon la revendication 2,
**caractérisé en ce que**
les données ainsi corrélées dans leur ensemble sont affectées en fonction du lieu et sont mémorisées.

4. Procédé selon l'une quelconque des revendications précédentes,
**caractérisé en ce que**
les données détectées, actuelles et relatives au lieu, sont transmises à une centrale pour l'adaptation aux données d'itinéraires externes électroniques en vue d'une évaluation externe par le biais d'un réseau mobile (GSM).

5. Procédé selon l'une quelconque des revendications précédentes,
**caractérisé en ce que**
les données peuvent être exportées ou importées par le biais d'un support de stockage amovible interne au véhicule automobile.

6. Dispositif pour conduire sur des itinéraires routiers avec un support de navigation à l'aide de données d'itinéraire cartographiées et/ou prédites de manière électronique, à l'aide de moyens de navigation, une reconnaissance optique du tracé pouvant être effectuée par une caméra (2), et ces données pouvant être acheminées à un ordinateur d'analyse (1) à l'aide duquel les données de navigation et les données de reconnaissance du tracé actuelles peuvent être corrélées en fonction du lieu,
**caractérisé en ce que**
le dispositif est prévu pour reconnaître des écarts par rapport aux données de tracé connues, ces écarts étant alors mémorisés en plus des données d'itinéraires avec correction adaptative et en fonction du lieu, ou bien étant envoyés à une centrale.

7. Dispositif selon la revendication 6,
**caractérisé en ce que**
on associe à la caméra (2), ou on monte derrière elle une unité électronique de reconnaissance des panneaux routiers ou une unité électronique d'interprétation des panneaux routiers (4).

8. Dispositif selon l'une quelconque des revendications 6 ou 7,
**caractérisé en ce que**
l'ordinateur de navigation (20) est branché du point de vue de la technique d'information de manière bidirectionnelle avec l'ordinateur d'analyse (1), afin d'acheminer à la fois des données de navigation à l'ordinateur d'analyse et de transmettre des données corrélées de l'ordinateur d'analyse (1) au système de navigation en vue d'une mémorisation stratégique adaptative.

9. Dispositif selon la revendication 8,
**caractérisé en ce que**
l'ordinateur de navigation (20) est pourvu d'une unité de stockage amovible (23).

10. Dispositif selon l'une quelconque des revendications 6 à 9,
**caractérisé en ce que**
l'ordinateur d'analyse (1) est branché logiquement avec l'unité Tempomat et l'unité ADR (5) en vue d'une commande complète automatique du véhicule automobile.

11. Dispositif selon l'une quelconque des revendications 6 à 10,
**caractérisé en ce que**
des moyens (50) sont prévus pour intervenir automatiquement sur la direction.
